# EUROPEAN PATENT SPECIFICATION

(11) **EP 1 376 108 B1**
(45) Date of publication and mention of the grant of the patent: **15.08.2012**
(21) Application number: 03013728.5
(22) Date of filing: 17.06.2003
(51) Int. Cl.: G01N 23/207, G01N 23/20

(54) **X-ray diffractometer comprising a C-arm for examining an array of crystals**
Röntgendiffraktometer mit C-Arm zur Untersuchung von Kristallen in einem Array
Diffractomètre à rayons X avec bras en C pour l'examen d'un ensemble de cristaux

(30) Priority: 17.06.2002 JP 2002176435
(43) Date of publication of application: 02.01.2004
(73) Proprietor: Rigaku Corporation, Akishima-shi, Tokyo 196-8666 (JP); RIKEN, Wako-shi, Saitama 351-0198 (JP)
(72) Inventor: Yamano, Akihito, Akishima-shi, Tokyo 196-8666 (JP); Miyano, Masashi, Sayo, Hyogo, 679-5148 (JP); Hamada, Kensaku, Sayo, Hyogo, 679-5148 (JP)
(74) Representative: Hofer, Dorothea

(56) References cited:
- EP-A2- 1 106 141
- WO-A-00/36405
- WO-A-03/081221
- US-A- 5 048 069
- US-A- 6 111 930
- US-A1- 2002 067 800
- US-B1- 6 507 636

## Description

### BACKGROUND OF THE INVENTION

### 1. Field of the Invention

The present invention relates to a crystal evaluating device for measuring and evaluating the crystal quality of crystal samples by using a diffraction phenomenon of X-rays, and particularly to a crystal evaluating device suitable for crystal evaluation of proteins.

### 2. Description of the Related Art

Since the double helix structure of DNA was discovered, worldwide attention has been increasingly paid to the structure analysis of proteins in connection with the developments of the genome project.

Various methods such as a method using NMR (Nuclear Magnetic Resonance), a method using an electron microscope, a method using a diffraction phenomenon of X-rays, etc. have been developed for the structure analysis of proteins. Out of these methods, the X-ray crystal structure analysis using the diffraction phenomenon of X-rays has advanced dramatically in connection with the developments of two-dimensional X-ray detectors such as imaging plates, etc. and analysis software for two-dimensional data.

According to the conventional protein crystal structure analysis based on the diffraction phenomenon of X-rays, a target protein is first crystallized in solution to achieve a crystal particle of the protein, and then the crystal particle of the protein thus achieved is inserted into a glass tubule called as a capillary. The capillary having the crystal particle of the protein mounted therein is sealed, and then mounted in an X-ray diffraction apparatus.

In this case, the crystal particle of the protein is sealingly inserted into the capillary by a manual work using a Pasteur pipette, so that the sealing work is cumbersome and needs much time. In addition, it is also required to carry out the mount work of mounting the capillary in the X-ray diffraction apparatus every time one measuring operation is finished. Accordingly, the conventional protein crystal structure analysis has been unsuitable for such a case that many crystal samples are required to be quickly measured and evaluated.

For example, it has been estimated that the proteins constituting the human body contain fifty thousands to one hundred thousands kinds of proteins, and it has been an urgent problem in the recent structural biology to clarify the structures of these many proteins in short term.

US 6,111,930 A discloses an automatic sample changer for an X-ray diffractometer for the automatic intake of a multitude of samples into the measurement position on the goniometer axis of an X-ray diffractometer in which the individual samples, each showing a surface, which meets the goniometer axis at a tangent in the measurement position, are linearly arranged on an insertable magazine. The samples on the magazine can be moved in the direction of the goniometer axis in order to transport each sample translationally into the measurement position. Furthermore the sample changer, the magazine and the mountings show recesses, which allow the refracted X-ray beams from the sample in transmission mode to pass through to the detector unimpeded. The sample changer is suitable for reflection mode as well as transmission mode measurements without having to redesign the system.

### SUMMARY OF THE INVENTION

The present invention has been implemented in the foregoing situation, and has an object to provide a crystal evaluating device that can quickly perform X-ray diffraction measurements on many crystal samples and also perform crystal structure analysis and evaluation with high reliability.

The object is attained by crystal evaluating device according to claim 1. Further developments of the invention are specified in the dependent claims, respectively.

According to the crystal evaluating device of the present invention, for example, a crystallization plate having plural recess portions in which protein crystals are grown (generated) is used as a sample holder, and it is directly mounted on the sample stage and subjected to the X-ray diffraction measurement.

The crystallization plate is originally used as an instrument for crystallizing proteins. However, when the crystallization plate is directly used as a sample holder, crystal particles generated on the crystallization plate is not needed to be individually transferred into capillaries one by one, and the time needed for the measurement work can be shortened.

Furthermore, according to the present invention, the X-ray irradiating means and the X-ray detecting means are fixed to the rotational arm, and the rotational arm can be freely rotated by any angle with the rotational driving mechanism. Therefore, the integrated intensities of the diffracted X-rays from the crystal sample can be determined without rotating the sample holder.

The integrated intensities of the diffracted X-rays are determined by irradiating X-rays to a crystal being measured from various angles to detect the intensities of the diffracted X-rays and then integrating the intensity data thus detected. According to the conventional method, the integrated intensities of the diffracted X-rays are detected and determined by rotating a capillary containing a crystal sample mounted therein.

In order to analyze the structure of a protein, it is required to determine the integrated intensities of X-rays diffracted from the crystal of the protein. That is, reflected X-rays from a crystal which may induce diffraction to the X-rays is distributed in a spherical form in a reciprocal lattice space (diffraction space). This means that the peak intensities (diffraction spots) of the reflected X-rays are distributed in a spherical form (i.e., distributed three-dimensionally) in a reciprocal lattice space. Accordingly, the peak intensity (diffraction spot) of the diffracted X-rays detected at a fixed position with respect to the crystal is achieved by observing only a cross-section through which the reflection X-rays distributed in the spherical form are passed, that is, the peak intensity of the diffracted X-rays detected at a fixed position merely corresponds to the peak intensity of the reflected X-rays which is achieved at a position on a plane intersecting to the spherical distribution of the reflected X-rays. The peak intensity (diffraction spot) thus detected is merely one of several hundreds to several thousands of peak intensities (diffraction spots) needed for the structure analysis of the crystal (i.e., needed to determine a molecular structure).

A crystallization plate is used as a sample holder. Recess portions (or grooves) formed in the crystallization plate are filled with solution and thus crystals exist in the solution while being floated in the solution. Accordingly, if the crystallization plate is rotated, the solution would spill over the crystallization plate or the crystals would move. This disturbs the X-ray diffraction measurement, and thus it is impossible to rotate the crystallization plate.

On the other hand, the crystal evaluating device according to the present invention is designed so that the X-ray irradiating means and the X-ray detecting means are rotated with respect to the sample holder. That is, the sample holder is not rotated. Therefore, peak intensities (diffraction spots) can be detected on plural cross sections (planes) for the diffracted X-rays from the crystal which is distributed in a spherical form, and then the integrated intensities thereof can be calculated. As a result, the crystal structure can be analyzed and evaluated with high reliability on the basis of the integrated intensities of diffracted X-rays thus detected.

Furthermore, the sample stage may be constructed by an X-Y table on which a sample holder is controlled to be movable in two perpendicular directions on the horizontal plane. This construction enables plural crystal samples mounted in the sample holder to be successively positioned onto a measurement line of X-rays by using the X-Y table, so that the workability can be further enhanced.

The sample stage may be designed so that the sample holder is controlled to be further movable in the up-and-down direction. The crystal samples mounted in the sample holder are preferably positioned onto the rotational axis of the X-ray irradiating means and the X-ray detecting means.

According to the construction described above, the positioning of the crystal samples with respect to the rotational axis described above can be implemented by controlling the movement of the sample holder in the two perpendicular directions on the horizontal plane and in the up-and-down direction.

Furthermore, the X-ray detecting means is constructed by a two-dimensional X-ray detector for detecting diffracted X-rays from a crystal sample on a plane.

The two-dimensional X-ray detector can collectively detect diffracted X-rays radially-reflected from a crystal sample, and thus the measurement time can be dramatically shortened. According to the two-dimensional X-ray detector, the peak intensities of diffracted X-rays reflected radially from a crystal sample are detected as diffraction spots.

An imaging plate or CCD (Charge Coupled Device) is widely known as a two-dimensional X-ray detector, however, the two-dimensional X-ray detector used in the present invention is not limited to these elements.

Furthermore, the crystal evaluating device according to the present invention may be further equipped with a detecting position adjusting mechanism for making the X-ray detector means approach to or get away from the sample holder disposed at the sample mount portion.

The detecting position adjusting mechanism is particularly effective to a case where the two-dimensional X-ray detector is used. In general, as the two-dimensional X-ray detector is approached to the crystal sample, the diffraction spots of X-rays radially reflected from crystal sample can be detected in a wide angular range. However, in the case of a crystal sample having a high lattice density, when the two-dimensional X-ray detector is approached to the crystal sample, the diffraction spots of X-rays radially reflected from the crystal sample may be detected while overlapped with one another.

Therefore, according to the present invention, the distance between the crystal sample and the X-ray detecting means is suitably adjusted by the detecting position adjusting mechanism to thereby achieve proper detection data.

The detecting position adjusting mechanism may be designed so that the X-ray detecting means is controlled to be movable in parallel to the sample holder disposed at the sample mount portion, whereby the detection range of diffracted X-rays radially reflected from the crystal sample can be arbitrarily changed.

The X-ray irradiating means may be constructed by an X-ray source for generating X-rays, and an X-ray optical system for making the X-rays thus generated monochromatic and then guiding the monochromatic X-rays to the crystal sample in the sample mount portion.

Furthermore, the crystal evaluating device according to the present invention may be equipped with image forming means for detecting the position of the crystal sample in the sample holder and picking up images of the crystal sample.

### BRIEF DESCRIPTION OF THE DRAWINGS

Fig. 1 is a diagram showing a crystal evaluating device according to an embodiment of the present invention;
Fig. 2A is a perspective view showing an example of the construction of a sample holder;
Fig. 2B is a cross-sectional view showing the sample holder with a part of the sample holder being enlarged; and
Fig. 3 schematically shows the measurement principle of the crystal evaluating device according to the embodiment of the present invention.

### DETAILED DESCRIPTION OF THE PREFERRED EMBODIMENTS

A preferred embodiment according to the present invention will be described with reference to the accompanying drawings.

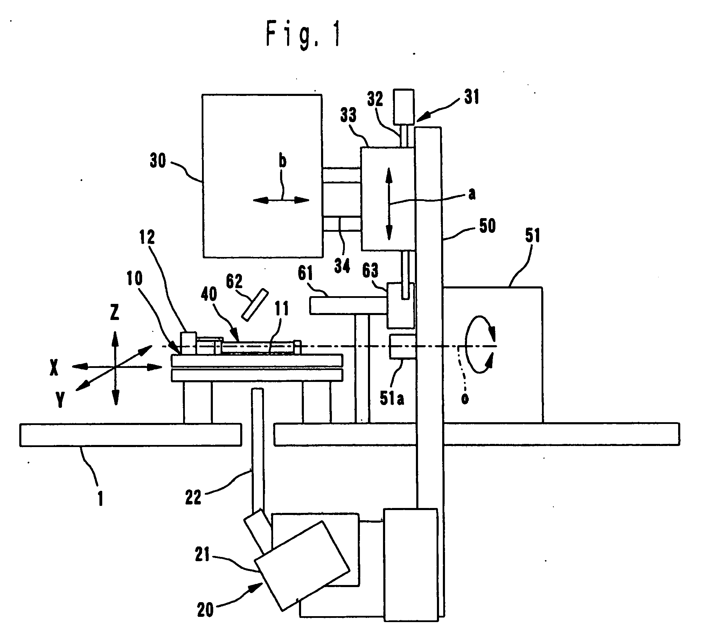

Fig. 1 is a diagram showing a crystal evaluating device according to an embodiment of the present invention.

As shown in Fig. 1, the crystal evaluating device according to this embodiment is equipped with a sample stage 10, an X-ray irradiating unit 20 (X-ray irradiating means) and an X-ray detector 30 (X-ray detecting means).

The sample stage 10 is mounted on the main body 1 of the crystal evaluating device. The sample stage 10 comprises an X-Y-Z table which is designed to be movable three dimensionally, that is, in two perpendicular directions (X,Y directions in Fig. 1) on the horizontal plane and in a vertical (up-and-down) direction (Z direction in Fig. 1). Furthermore, a sample mount portion 11 for allowing a sample holder 40 to be disposed in a horizontal position is equipped on the upper surface of the sample stage 10.

An opening (not shown) through which X-rays irradiated from the lower side of the sample mount portion 11 is transmitted is formed in the bottom surface of the sample mount portion 11.

Furthermore, a holder fixing mechanism 12 for fixing the sample holder 40 to the sample mount portion 11 is equipped to the sample stage 10. The holder fixing mechanism 12 may be equipped with a fixing pin which is driven to be protruded and retracted by an actuator, for example. In this case, the sample holder 40 is fixed under pressure by the fixing pin which is protruded and retracted by the actuator.

A generally-known crystallization plate may be used as the sample holder 40. The crystallization plate may be formed of material having permeability to X-rays such as polyimide or the like.

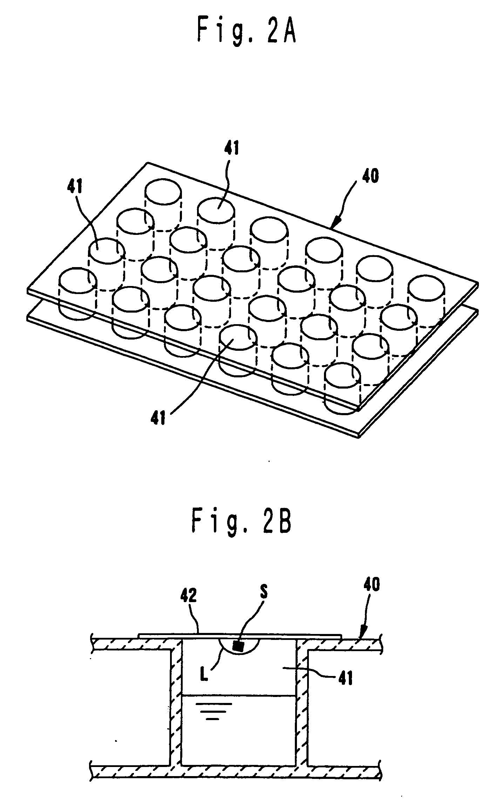

Fig. 2A is a perspective view of the crystallization plate used as the sample holder 40. As shown in Fig. 2A, many recess portions 41 are formed in the sample holder 40 (crystallization plate), and crystals of proteins are grown and generated in these recess portions 41. Various methods such as a vapor diffusion method, etc. are known as a method of generating (growing) protein crystals by using the crystallization plate as described above.

Fig. 2B is a schematic diagram showing the state that a crystal particle (crystal sample S) of protein is generated by the vapor diffusion method, and the protein crystal particle (crystal sample S) is grown in a drop of solution L disposed on the lower surface of a cover plate 42.

The protein crystal particles may be individually grown in the respective recess portions 41 of the sample holder 40 under different crystal growth conditions respectively, or crystal particles of different kinds of proteins may be individually grown in the respective recess portions 41.

As described above, according to the crystal evaluating device of this embodiment, by directly mounting the sample holder (the crystallization plate) 40 on the sample stage 10, plural crystal samples S formed in the respective recess portions 41 of the sample holder 40 can be automatically and sequentially measured and evaluated. In addition, the mount and sealing work of transferring each crystal sample S from a crystal-growing portion into a capillary and then sealing the capillary, so that the workability can be more remarkably enhanced.

The X-ray irradiating unit 20 is equipped with an X-ray source 21 and an X-ray optical system 22, and an X-ray generator for laboratories is used as the X-ray generator 21. The X-ray generator for laboratories contains an electron gun for emitting electrons and a target against which the electrons emitted from the electron gun impinge to generate X-rays. The X-rays thus generated are directed to the sample holder 40. The X-ray generator as described above is different from large-scale X-ray generating facilities for generating radiation light and it is remarkably small in dimension and remarkably light in weight. Therefore, such an X-ray generator can be rotated while mounted on a rotational arm as described later.

The X-ray optical system 22 functions to select X-rays having only a special wavelength (i.e., making the X-rays generated in the X-ray source 21 monochromatic), converging the monochromatic X-rays to the sample mount portion 11 on the sample stage 10, etc. The X-ray optical system 22 is constructed by combining various optical equipment such as a cone focal mirror, a collimator, etc.

A two-dimensional X-ray detector is used as the X-ray detector 30. Particularly, this embodiment uses CCD (Charge Coupled Device) as the X-ray detector 30. CCD is designed to detect diffracted X-rays from each crystal sample S on a plane, and it converts the intensities of the diffracted X-rays thus detected to electrical signals, and outputs the electrical signals to a data processing computer (not shown).

The X-ray irradiating unit 20 and the X-ray detector 30 are respectively mounted on the rotational arm 50. The rotational arm 50 may be designed in any shape. For example, it may be designed in a planar or rod-like shape. The X-ray irradiating unit 20 is mounted at one end of the rotational arm 50, and the X-ray detector 30 is mounted on the other end portion thereof so as to confront the X-ray irradiating unit 20.

The center portion of the rotational arm 50 is fixed to the rotating shaft 51a of a rotational driving mechanism 51 for rotating the rotational arm 50, and the rotational arm 50 is allowed to be rotated around the rotating shaft 51a by any angle by actuating the rotational driving mechanism 51.

The center line O of the rotating shaft 51a of the rotational driving mechanism 51 is disposed in a substantially horizontal position, and the optical axis of the X-rays irradiated from the X-ray irradiating unit 20 is adjusted to cross the center axis O of the rotating shaft 51a.

The rotational driving mechanism 51 comprises a driving motor such a stepping motor or the like whose rotational angle can be controlled with high precision, and a gear mechanism for transmitting the rotational force of the driving motor to the rotating shaft, for example.

The rotational angle of the driving motor is controlled by a control computer (not shown). It is preferable that the rotational angle can be freely controlled in each of both the clockwise and counterclockwise (positive and negative) directions indicated by arrows in the angular range of about 45 degrees (i.e., within ±45°).

In this embodiment, the X-ray irradiating unit 20 mounted on the rotational arm 50 is disposed below the sample stage 10, and also the X-ray detector 30 mounted on the rotational arm 50 is disposed above the sample stage 10 as shown in Fig. 1. The crystal sample S generated in the sample holder on the sample stage 10 is irradiated with X-rays from the lower side by the X-ray irradiating unit 20, and the diffracted X-rays reflected from the crystal sample S are detected by the X-ray detector 30 disposed above the sample holder 40.

In this case, the X-ray irradiating unit 20 and the X-ray detector 30 may be disposed in the opposite arrangement to that described above. That is, the X-ray irradiating unit 20 may be disposed above the sample stage 10 while the X-ray detector 30 is disposed below the X-ray detector 30.

Here, the X-ray detector 30 is equipped with a detecting position adjustment mechanism 31 for freely moving the X-ray detector 30 in the radial direction with respect to the rotation of the rotational arm 50 (i.e., in the direction indicated by an arrow a in Fig. 1) and also in a direction parallel to the sample stage 10 (i.e., in the direction indicated by an arrow b in Fig. 1).

In the embodiment shown in Fig. 1, the detecting position adjustment mechanism 31 comprises at least one first guide rail 32 disposed on the rotational arm 50 so as to extend in the radial direction (elongated direction) of the rotational arm 50, a first movable table 33 movable along the first guide rail(s) 32, at least one second guide rail 34 extending in the direction indicated by the arrow B from the movable table 33, a second movable table (not shown) movable along the second guide rail(s) 34, and a driving motor (not shown) for moving each movable table. The X-ray detector 30 is fixed to the second movable table.

The crystal evaluating device of this embodiment is equipped with an image pickup camera (image forming means) for checking the position of the crystal sample S under measurement in the sample holder 40. The image pickup camera is disposed in the main body 1 of the crystal evaluating device like the sample stage 10, and it comprises a telescope for viewing the crystal sample S under measurement in the sample holder 40 from a remote place while magnifying the pictures of the crystal sample S, a reflection mirror 62 for reflecting the pictures of the crystal sample S in the sample holder 40 to the telescope 61, and CCD 63 for picking up the pictures of the crystal sample S which are enlarged by the telescope 61.

The image pickup camera comprising the reflection mirror 62, the telescope 61 and CCD 63 is movably mounted in the main body 1 of the device so as to approach to or get away from the sample holder 40 on the sample stage 10. When the X-ray measurement is carried out, the image pickup camera is kept to be retracted at a retract position away from the sample holder 40.

The pictures of the crystal sample S picked up by CCD 63 are subjected to image processing and then displayed on a monitor. The control computer recognizes the position of the crystal sample S under measurement on the basis of the image pickup position of CCD 63, and controls the detecting position adjustment mechanism 31 and the rotational driving mechanism 51.

The crystal evaluating device thus constructed can measure the crystal sample S under measurement through the following process.

First, the sample holder 40 is mounted on the sample stage 10. This mount operation may be automatically carried out by using a carry robot disposed aside the crystal evaluating device. Subsequently, any crystal sample S generated in the sample holder 40 is positioned with respect to the optical axis of X-rays radiated from the X-ray irradiating unit 20. This positioning operation is carried out while adjusting the movement of the sample stage 10 in the X, Y directions.

When the position of the crystal sample S in the sample holder 40 disposed on the sample stage 10 is detected in advance in the preceding step, the control computer controls the movement of the sample stage 10 in the X, Y directions on the basis of the detection result to automatically position the crystal sample S.

On the other hand, when the position of the crystal sample S is not detected in advance or when the position of the crystal sample S in the sample holder 40 is moved due to vibration during feeding or the like, the position of the crystal sample S can be checked by the image pickup camera to position the crystal sample under measurement again.

Furthermore, as described later, when the X-ray irradiating unit 20 is rotated, the crystal sample S under measurement must be always located on the optical axis of the X-rays irradiated from the X-ray irradiating unit 20. Therefore, the crystal sample S is required to be positioned onto the center line O of the rotating shaft 51a. This positioning operation of the crystal sample S onto the center line O is carried out by adjusting the movement of the sample stage 10 in the Z direction.

Furthermore, the distance between the crystal sample S and the X-ray detector 30 may be adjusted as occasion demands. As described above, as the X-ray detector 30 is approached to the crystal sample S, the diffraction spots (intensities) of the X-rays radially-reflected from the crystal sample S can be detected in a wider angular range. However, in the case where the reciprocal lattice density of the crystal sample is high, as the X-ray detector 30 is approached to the crystal sample S, there is a risk that the diffraction spots of the X-rays radially-reflected from the crystal sample S are detected while more remarkably overlapped with one another.

Therefore, the movement of the X-ray detector 30 in the direction of the arrow a in Fig. 1 is adjusted by the detecting position adjusting mechanism 31 so as to suitably adjust the distance between the crystal sample S and the X-ray detector 30, whereby proper detection data can be achieved.

Furthermore, the movement of the X-ray detector 30 in the direction of the arrow b in Fig. 1 is adjusted by the detecting position adjusting mechanism 31, whereby the detection range of the diffracted X-rays radially-reflected from the crystal sample S can be changed.

After the crystal sample S and the X-ray detector 30 are positioned as described above, the X-rays are radially irradiated from the X-ray irradiating unit 20 to carry out the X-ray diffraction measurement.

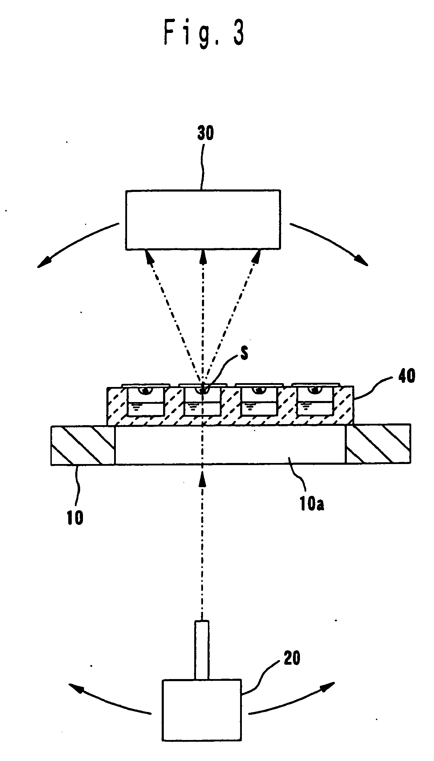

As shown in Fig. 3, the X-rays irradiated from the X-ray irradiating unit 20 are incident from the lower side to a crystal sample S under measurement in the sample holder 40. The sample stage 10 has the opening 10a formed therein, and the sample holder 40 is formed of the material having permeability to X-rays . Therefore, the X-rays are transmitted through these elements and irradiated to the crystal sample S under measurement.

The X-rays incident to the crystal sample S are radially diffracted (reflected), and the diffracted X-rays are detected by the X-ray detector 30. The data processing computer (not shown) carries out the crystal evaluation and the crystal structure analysis on the basis of the intensity data of the diffracted X-rays thus detected.

When X-rays are irradiated to the crystal sample S from various angle sides to detect the intensities of the diffracted X-rays, the rotational arm 50 is rotated by the rotational driving mechanism 51 to adjust the angles of the X-ray irradiating unit 20 and the X-ray detector 30 with respect to the lattice plane of the crystal sample S, that is, adjusting the intersecting angle between the optical axis of the X-rays irradiated from the X-ray irradiating unit 20 and the lattice plane, and the X-ray diffraction measurement described above is repeated.

By repeating the X-ray diffraction measurement, the integrated intensities of the diffracted X-rays for the crystal sample S can be determined without rotating the sample holder 40, and further the crystal structure analysis can be implemented on the basis of the integrated intensities with high reliability.

The present invention is not limited to the above embodiment, and various modifications may be made without departing from the subject matter of the present invention. For example, the sample holder is not limited to the crystallization plate, and any member may be used insofar as it has permeability to X-rays . The number of crystal samples S generated in the sample holder 40 may be one or more. Furthermore, the crystal evaluating device of the present invention may be applied to not only the crystal evaluation of proteins, but also the crystal evaluation of low molecules, etc.

According to the crystal evaluation device of the present invention as described above, the X-ray diffraction measurements on many crystal samples can be completely automatically and quickly performed, and also the crystal structure analysis and evaluation can be performed with high reliability.

## Claims

1. A crystal evaluating device comprising:
a sample stage (10) on which an X-ray permeable sample holder (40) having at least one crystal sample (S) mounted therein is mounted in a substantially horizontal position, said sample stage forming an X-ray permeable sample mount portion (11);
X-ray irradiating means (20) for irradiating X-rays to the crystal sample in said sample holder mounted on said sample mount portion from the upper side or lower side;
X-ray detecting means (30) for detecting X-rays diffracted from the crystal sample and transmitted through said sample holder,
said X-ray detecting means (30) comprising a two-dimensional X-ray detector for detecting diffracted X-rays from the crystal sample (S) on a plane,
a rotational arm (50) wherein said X-ray irradiating means is mounted at one end of the rotational arm, and said X-ray detecting means is mounted on the other end portion thereof so as to confront the X-ray irradiating means ;
and a rotational driving mechanism (51) for rotating said rotational arm around a substantially horizontal axis (51a) by any angle;
wherein said sample holder (40) comprises a crystallization plate in which plural recess portions (41) for generating protein crystals are formed.

2. The crystal evaluating device according to claim, wherein said sample stage (10) comprises an X-Y table for adjusting the movement of said sample holder in two perpendicular directions (X, Y) on a horizontal plane.

3. The crystal evaluating device according to claim 2, wherein said sample stage (10) further adjusts the movement of said sample holder (40) in an up-and-down direction (Z).

4. The crystal evaluating device according to claim 3, further comprising a detecting position adjusting mechanism (31) for making said X-ray detecting means (30) approach to or get away from said sample holder (40) disposed on said sample mount portion (11).

5. The crystal evaluating device according to claim 4, wherein said detecting position adjusting mechanism (31) further adjusts the movement of said X-ray detector (30) in parallel to said sample holder (40) disposed on said sample mount portion (11).

6. The crystal evaluating device according to one of claims 1 to 5, wherein said X-ray irradiating means (20) comprises an X-ray source (21) for generating X-rays, and an X-ray optical system (22) for making monochromatic X-rays generated from said X-ray source, and then directing the monochromatic X-rays to the crystal sample (S) on said sample mount portion (11) .

7. The crystal evaluating device according to one of claims 1 to 6, further image forming means (61-63) for detecting the position of the crystal sample (S) in said sample holder (40) and picking up pictures of the crystal sample.

## Patentansprüche

1. Kristallevaluierungsvorrichtung mit:
einer Probenplattform (10), auf der ein röntgenstrahlendurchlässiger Probenhalter (40), auf dem zumindest eine Kristallprobe (S) angebracht ist, in einer im Wesentlichen horizontalen Lage angebracht ist, wobei die Probenplattform einen röntgenstrahlendurchlässigen Probenanbringungsabschnitt (11) bildet,
einem Röntgenstrahlenausstrahlmittel (20) zum Abstrahlen von Röntgenstrahlen zu der Kristallprobe in dem Probenhalter, der auf dem Probenanbringungsabschnitt angebracht ist, von der oberen Seite oder der unteren Seite,
einem Röntgenstrahlenerfassungsmittel (30) zum Erfassen von Röntgenstrahlen, die von der Kristallprobe gebeugt und durch den Probenhalter übertragen werden, wobei das Röntgenstrahlenerfassungsmittel (30) einen zweidimensionalen Röntgenstrahlendetektor enthält zum Erfassen der von der Kristallprobe (S) gebeugten Röntgenstrahlen in einer Ebene,
einem Dreharm (50), wobei das Röntgenstrahlenausstrahlmittel an einem Ende des Dreharms angebracht ist und das Röntgenstrahlenerfassungsmittel an seinem anderen Endabschnitt angebracht ist, so dass es dem Röntgenstrahlenausstrahlmittel gegenüber liegt, und
einem Dreharmantriebsmechanismus (51) zum Drehen des Dreharms um eine im Wesentlichen horizontale Achse (51a) um einen beliebigen Winkel,
wobei der Kristallhalter (40) eine Kristallisierungsplatte enthält, in der mehrere Vertiefungsabschnitte (41) zum Erzeugen von Proteinkristallen gebildet sind.

2. Kristallevaluierungsvorrichtung gemäß Anspruch 1, bei der die Probenplattform (10) einen X-Y-Tisch enthält zum Einstellen der Bewegung des Probenhalters in zwei zueinander senkrechten Richtungen (X, Y) in einer horizontalen Ebene.

3. Kristallevaluierungsvorrichtung gemäß Anspruch 2, bei der die Probenplattform (10) weiter die Bewegung des Probenhalters (40) in einer auf-und-ab-Richtung (Z) einstellt.

4. Kristallevaluierungsvorrichtung gemäß Anspruch 3, die weiter einen Erfassungspositionseinstellmechanismus (31) enthält, um das Röntgenstrahlenerfassungsmittel (30) sich dem Probenhalter (40), der auf dem Probenanbringungsabschnitt (11) angebracht ist, nähern oder von ihm entfernen zu lassen.

5. Kristallevaluierungsvorrichtung gemäß Anspruch 4, bei der der Erfassungspositionseinstellmechanismus (31) weiter die Bewegung des Röntgenstrahlendetektors (30) parallel zu dem Probenhalter (40), der auf dem Probenanbringungsabschnitt (11) angebracht ist, einstellt.

6. Kristallevaluierungsvorrichtung gemäß einem der Ansprüche 1 bis 5, bei dem das Röntgenstrahlenausstrahlmittel (20) enthält:
eine Röntgenstrahlenquelle (21) zum Erzeugen von Röntgenstrahlen und
ein Röntgenstrahlenoptiksystem (22), um die von der Röntgenstrahlenquelle erzeugten Röntgenstrahlen monochromatisch zu machen und dann die monochromatischen Röntgenstrahlen and zu der Kristallprobe (S) auf dem Probenanbringungsabschnitt (11) zu leiten.

7. Kristallevaluierungsvorrichtung gemäß einem der Ansprüche 1 bis 6 mit einem Bildformungsmittel (61-63) zum Erfassen der Position der Kristallprobe (S) in dem Probenhalter (40) und Aufnehmen von Bildern der Kristallprobe.

## Revendications

1. Dispositif d'évaluation d'un cristal comportant :
- un plateau à échantillons (10) sur lequel est installé un support d'échantillons (40) perméable aux rayons X, au moins un échantillon cristal (S) étant monté dans le support dans une position pratiquement horizontale, ce plateau à échantillons constituant une partie de montage d'échantillons (11) perméable aux rayons X,
- un moyen d'irradiation par rayons X (20) pour irradier l'échantillon de cristal avec des rayons X dans le support d'échantillons installé sur la partie de montage d'échantillons à partir du dessus ou du dessous,
- un moyen de détection de rayons X (30) pour détecter les rayons X diffractés par l'échantillon de cristal et transmis à travers le support d'échantillons, ce moyen de détection de rayons X (30) comportant un détecteur de rayons X à deux dimensions pour détecter les rayons X diffractés par l'échantillon cristal (S) dans un plan,
- un bras rotatif (50),
* le moyen d'irradiation de rayons X étant monté à une extrémité du bras rotatif et le moyen de détection de rayons X étant monté à l'autre extrémité de celui-ci pour être en face du moyen d'irradiation par rayons X, et
- un mécanisme d'entrainement en rotation (51) faisant tourner le bras rotatif autour d'un axe (51 a) pratiquement horizontal, suivant un angle quelconque, et
- le support d'échantillons (40) comportant une plaque de cristallisation avec un ensemble de parties en creux (41) pour générer des cristaux de protéines.

2. Dispositif d'évaluation d'un cristal selon la revendication 1,
selon lequel le plateau à échantillons (10) comporte une table en X-Y pour régler le mouvement du support d'échantillons dans deux directions perpendiculaires (X, Y) dans un plan horizontal.

3. Dispositif d'évaluation d'un cristal selon la revendication 2,
dans lequel le plateau à échantillons (10) règle en outre le mouvement du support d'échantillons (40) dans le sens montant et descendant (Z).

4. Dispositif d'évaluation d'un cristal selon la revendication 3,
**caractérisé en ce qu'**
il comporte en outre un mécanisme de réglage de détection de position (31) pour commander le rapprochement ou l'éloignement du moyen de détection des rayons X (30) par rapport au support d'échantillons (40) disposé sur la partie de montage d'échantillons (11).

5. Dispositif d'évaluation d'un cristal selon la revendication 4,
dans lequel le mécanisme de réglage de détection de position (31) règle en outre le mouvement du détecteur de rayons X (30) parallèlement au support d'échantillons (40) disposé sur la partie de montage d'échantillon (11).

6. Dispositif d'évaluation d'un cristal selon l'une des revendications 1 à 5,
selon lequel le moyen d'irradiation de rayons X (20) comporte une source de rayons X (21) générant des rayons X et un système optique à rayons X (22) pour générer des rayons X monochromatiques à partir de la source de rayons X puis diriger les rayons X monochromatiques sur l'échantillon de cristal (S) sur la partie de montage d'échantillons (11).

7. Dispositif d'évaluation d'un cristal selon l'une des revendications 1 à 6,
comportant en outre un moyen de formation d'images (61-63) pour détecter la position de l'échantillon de cristal (S) dans le support d'échantillon (40) et prendre des images de l'échantillon de cristal.
